# FASCICULE DE BREVET EUROPEEN

(11) **EP 3 571 433 B1**
(45) Date de publication et mention de la délivrance du brevet: **05.01.2022**
(21) Numéro de dépôt: 18703057.2
(22) Date de dépôt: 16.01.2018
(51) Int. Cl.: F16L 37/12

(54) **PIÈCE POUR LE RACCORDEMENT AXIAL DE DEUX TUBULURES**
TEIL ZUR AXIALEN KOPPLUNG ZWEIER ROHRE
PART FOR AXIALLY COUPLING TWO PIPES

(30) Priorité: 17.01.2017 FR 1750336
(43) Date de publication de la demande: 27.11.2019
(73) Titulaire: Valeo Systemes Thermiques, 78322 Le Mesnil Saint-Denis Cedex (FR)
(72) Inventeur: GONTIER, Cyril, 78322 Le Mesnil Saint-Denis Cedex (FR); PETIT, Stéphane, 78322 Le Mesnil Saint-Denis Cedex (FR); RUDLOFF, Emmanuel, 78322 Le Mesnil Saint-Denis Cedex (FR)
(74) Mandataire: Valeo Systèmes Thermiques
(86) Numéro de dépôt international: PCT/FR2018/050103
(87) Numéro de publication internationale: WO 2018/134513

(56) Documents cités:
- WO-A1-2016/083057
- DE-A1- 19 838 588
- DE-B3-102012 106 232
- FR-A1- 2 237 111

## Description

### DOMAINE TECHNIQUE

La présente invention a pour objet une pièce pour le raccordement coaxial de deux tubulures, en particulier pour le raccordement bout à bout de deux tubulures dans un circuit de fluide, notamment dans un véhicule automobile. L'invention a également pour objet un dispositif de raccordement axial de deux tubulures muni de cette pièce.

### ETAT DE L'ART

Le document WO 2016/083057 montre une pièce pour le raccordement coaxial de deux tubulures.

Un véhicule automobile est classiquement équipé d'une boucle de climatisation, ou circuit de fluide réfrigérant, à l'intérieur de laquelle circule un fluide réfrigérant. La boucle de climatisation comprend, notamment, un compresseur, un échangeur de chaleur extérieur, un organe de détente et un évaporateur parcourus par le fluide réfrigérant.

Les véhicules automobiles sont des lieux clos de faible volume, soumis à des environnements changeants. Il est donc indispensable d'y renouveler régulièrement l'air, et d'en réguler la température.

On utilise à cet effet des dispositifs de climatisation, ou climatiseurs. Ces systèmes sont conçus de façon à ce que de l'air chauffé ou refroidi soit soufflé à l'intérieur du véhicule.

Les dispositifs de climatisation pour véhicule automobile, en particulier les systèmes HVAC (Heating, Ventilation and Air Conditioning en langue anglaise) comportent généralement un circuit d'air entre au moins une bouche d'admission et au moins une bouche d'évacuation, sur lequel sont interposés divers moyens de traitement de l'air. La bouche d'admission d'air est une entrée d'air extérieur et/ou une entrée d'air recyclé. Les moyens de traitement de l'air sont notamment des moyens de ventilation pour mettre en mouvement un flux d'air à travers le circuit, des moyens de chauffage et/ou de refroidissement, comme par exemple un radiateur de chauffage d'air et un évaporateur destiné à refroidir l'air.

Le radiateur de chauffage d'air est relié à des tubulures, typiquement des tubulures traversant le tablier du véhicule en direction d'un système de refroidissement du moteur.

On connaît déjà de manière générale des dispositifs de raccordement de ce type qui sont utilisés plus particulièrement pour assurer une connexion à l'intérieur d'un circuit de fluide caloporteur dans un véhicule automobile. A cet effet, une application particulière d'un tel dispositif est le raccordement d'une tubulure d'entrée ou de sortie d'un échangeur de chaleur, dans lequel le fluide caloporteur doit échanger de la chaleur avec un autre milieu, et une conduite amenant le fluide dans ou hors de cet échangeur de chaleur.

Par le terme "tubulure" on entend désigner ici généralement tout moyen de transfert de fluide, qui comprend au moins une partie tubulaire, telle que, par exemple, un tube, un conduit, un embout, une entretoise, etc.

Le dispositif de raccordement a pour fonction de solliciter axialement l'un vers l'autre un élément de raccordement d'une première tubulure, comme une collerette et un élément de raccordement d'une deuxième tubulure, comme un bourrelet. Pour renforcer l'étanchéité, un joint annulaire d'étanchéité est serré de façon étanche entre les deux éléments de raccordement.

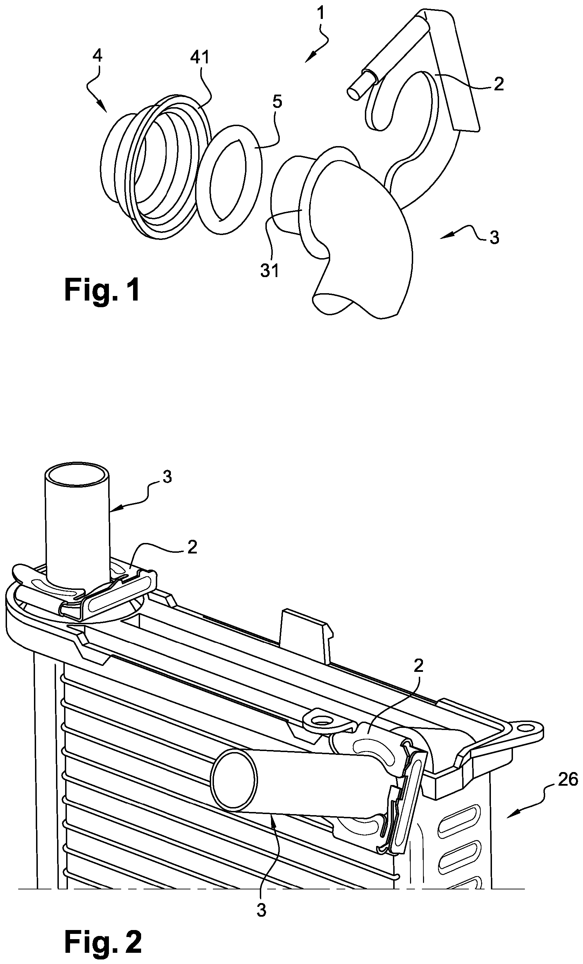

Un tel dispositif 1 est illustré à la figure 1. Une pièce 2 sous la forme d'un collier ouvert, tel que décrite par exemple dans le document EP 1 533 558, est utilisée pour le raccordement coaxial d'une première tubulure 3, qui est une tubulure mâle, et d'une seconde tubulure 4, qui est une tubulure femelle.

La première tubulure 3 comporte une région d'extrémité munie d'un bourrelet périphérique 31 qui définit un rebord annulaire, tandis que la deuxième tubulure 4 comprend une région d'extrémité qui définit une collerette 41 dans laquelle vient s'engager, au moins en partie, le bourrelet 31. Les régions d'extrémité sont conçues pour coopérer mutuellement, ici par emboîtement.

Dans l'exemple, la deuxième tubulure 4 constitue une tubulure d'entrée ou de sortie d'un échangeur de chaleur, tandis que la première tubulure 3 constitue une conduite amenant un fluide caloporteur dans ou hors de cet échangeur de chaleur. Dans une application préférentielle de l'invention, l'échangeur de chaleur constitue un radiateur de refroidissement d'un moteur de véhicule automobile ou encore un radiateur de chauffage 26 de l'habitacle d'un tel véhicule (figure 2).

Pour réaliser une liaison étanche entre les deux tubulures 3, 4, un joint annulaire d'étanchéité 5 est inséré au montage entre la collerette 41 et le bourrelet 31, le collier ouvert 2 étant agencé pour solliciter axialement l'un vers l'autre le bourrelet 31 et la collerette 41 pour comprimer le joint 5 et garantir l'étanchéité.

La pièce de raccordement 2, en forme de collier ouvert, est adaptée pour s'engager latéralement (assemblage radial) sur les deux tubulures 3,4 dont les régions d'extrémité ont préalablement été emboîtées.

Ce type de pièce de raccordement a pour inconvénient que l'assemblage n'est pas sûr et qu'il n'est pas possible de pré-assembler la pièce de raccordement sur les deux tubulures.

En outre, il n'est pas possible de détecter visuellement si le raccordement est effectué ou non.

L'invention vise à remédier à ces inconvénients.

### EXPOSE DE L'INVENTION

L'invention a ainsi pour objet une pièce pour le raccordement coaxial de deux tubulures de forme allongée. La pièce selon l'invention comprend deux parties de raccordement munies chacune d'une zone de réception d'un élément de raccordement de chaque tubulure, dont un élément de raccordement radialement externe et un élément de raccordement radialement interne, les deux parties de raccordement étant aptes à coulisser l'une dans l'autre, entre une position écartée des deux parties et une position resserrée des deux parties dans laquelle les deux zones de réception sont aptes à maintenir les éléments de raccordement ensemble et à former un contour fermé. En outre, au moins une partie de raccordement comprend :
- au moins un premier élément de rappel configuré pour permettre un pré-assemblage de la pièce de raccordement sur la zone de raccordement externe dans une position écartée des deux parties, en appuyant radialement sur une surface de plus grand diamètre de la tubulure munie de l'élément de raccordement externe, et
- au moins un deuxième élément de rappel configuré pour, et pour appuyer radialement sur une surface de plus petit diamètre de la tubulure munie de l'élément de raccordement externe.

Le deuxième élément de rappel est également configuré pour guider ledit au moins un premier élément de rappel vers la surface de plus grand diamètre de la tubulure munie de l'élément de raccordement externe en position écartée des deux parties.

Le deuxième élément de rappel est configuré pour appuyer radialement sur une surface de plus petit diamètre de la tubulure munie de l'élément de raccordement externe notamment dans une position resserrée des deux parties,

Ainsi, la coopération du premier et du deuxième élément de rappel permet de pré-assembler de manière efficace la pièce de raccordement sur les deux tubulures, le premier élément de rappel, guidé par le deuxième élément de rappel, réalisant le pré-assemblage.

Ainsi les premier et deuxième éléments de rappel correspondant à des lames flexibles permettent d'ouvrir automatiquement les demi-pièces de raccordement dans le sens radial, c'est-à-dire en les éloignant l'une de l'autre, en cas de mauvais verrouillage pour faciliter la détection d'un défaut de raccordement.

Chaque partie de raccordement peut comprendre un premier élément de rappel et un deuxième élément de rappel. Dans ce cas, la pièce de raccordement comprend deux premiers éléments de rappel et deux deuxièmes éléments de rappel.

Les deux premiers éléments de rappel peuvent être configurés de manière à ce que la résultante des deux forces exercées par les deux premiers éléments de rappel sur la surface de plus grand diamètre de la tubulure munie de l'élément de raccordement externe soit nulle. Les deux premiers éléments de rappel peuvent ainsi être disposés symétriquement par rapport au centre de symétrie de la pièce dans le plan passant par les deux premiers éléments de rappel.

De la même façon, les deux deuxièmes éléments de rappel peuvent être configurés de manière à ce que la résultante des deux forces exercées par les deux premiers éléments de rappel sur la surface de plus petit diamètre de la tubulure munie de l'élément de raccordement externe soit nulle. Les deux deuxièmes éléments de rappel peuvent ainsi être disposés symétriquement par rapport au centre de symétrie de la pièce dans le plan passant par les deux deuxièmes éléments de rappel.

Dans chaque partie de raccordement, le premier élément de rappel et le deuxième élément de rappel peuvent être disposés à deux niveaux longitudinaux différents.

La zone de réception de chaque partie de raccordement peut être une rainure.

Chaque partie de raccordement peut être un demi-anneau, de sorte que la pièce en position fermée (resserrée) forme un anneau.

Les zones de réception des deux parties de raccordement peuvent former une rainure annulaire disposée dans un plan radial de la pièce.

La rainure peut être délimitée par deux bordures extérieures de largeurs radiales différentes, dont une bordure extérieure radialement proximale du centre de la pièce et une bordure extérieure radialement distale du centre de la pièce.

Chaque premier élément de rappel peut être issu d'une bordure de la zone de réception et chaque deuxième élément de rappel peut être issu de la bordure extérieure radialement distale.

Chaque partie de raccordement peut comprendre une zone mâle coulissant dans une zone femelle associée de l'autre partie, et une zone femelle dans laquelle coulisse la zone mâle de l'autre partie de raccordement.

La zone mâle de chaque partie de raccordement peut comprendre au moins un bras coulissant dans au moins rail de la zone femelle de l'autre partie de raccordement.

Un bossage peut être disposé dans chaque rail, ledit bossage étant apte à maintenir les deux parties de raccordement dans une position écartée.

Chaque partie de raccordement peut être munie d'au moins un clip, de manière à ce que la position resserrée des deux parties de raccordement soit obtenue par clippage.

Chaque partie de raccordement peut comprendre en outre un élément en saillie du pourtour de la partie et qui vient se clipper dans une ouverture de l'autre partie de raccordement.

L'invention a également pour objet un dispositif pour le raccordement coaxial de deux tubulures, par coopération d'une région d'extrémité d'une première tubulure avec une région d'extrémité d'une deuxième tubulure.

Le dispositif selon l'invention comprend une pièce de raccordement qui est disposée autour d'éléments de raccordement des tubulures.

Chaque tubulure comprenant un élément de raccordement, l'élément de raccordement de la première tubulure peut être un bourrelet et l'élément de raccordement de la deuxième tubulure est une collerette.

Le dispositif peut comprendre en outre un joint annulaire d'étanchéité.

Un procédé de raccordement coaxial de deux tubulures à l'aide d'une pièce de raccordement décrite ci-dessus comprend, dans une région d'extrémité des deux tubulures et autour des éléments de raccordement des deux tubulures, une étape de coulissement des deux parties de raccordement depuis une position écartée des deux parties jusqu'à une position resserrée des deux parties dans laquelle les deux zones de réception des deux parties forment un contour fermé et maintiennent les éléments de raccordement ensemble.

Le procédé peut comprendre, préalablement à l'étape de coulissement, une étape de pré-positionnement de la pièce de raccordement, en position écartée des deux parties de raccordement, autour d'une région d'extrémité d'une des deux tubulures.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1, déjà décrite, est une vue partielle éclatée d'un dispositif de raccordement coaxial de deux tubulures utilisant une pièce de raccordement de l'état de la technique,
- la figure 2, déjà décrite, est une vue partielle en perspective d'un radiateur de chauffage de l'habitacle d'un véhicule automobile, muni de deux dispositifs de raccordement selon la figure 1,
- la figure 3 illustre partiellement une pièce de raccordement selon l'invention, en position ouverte,
- la figure 4 illustre partiellement une pièce de raccordement selon l'invention, en position fermée,
- les figures 5 et 6 sont des vues de détail de la figure 3,
- la figure 7 est une vie en coupe longitudinale d'une zone de raccordement de deux tubulures,
- la figure 8 est une vue partielle en perspective d'une pièce de raccordement selon l'invention,
- la figure 9 est une vue partielle en perspective d'une pièce de raccordement selon l'invention, en configuration opérationnelle sur une tubulure, et
- les figures 10A à 10C illustrent différentes étapes d'un raccordement coaxial de deux tubulures utilisant une pièce de raccordement selon l'invention.

Sur ces figures, les éléments identiques portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

### DESCRIPTION DETAILLEE

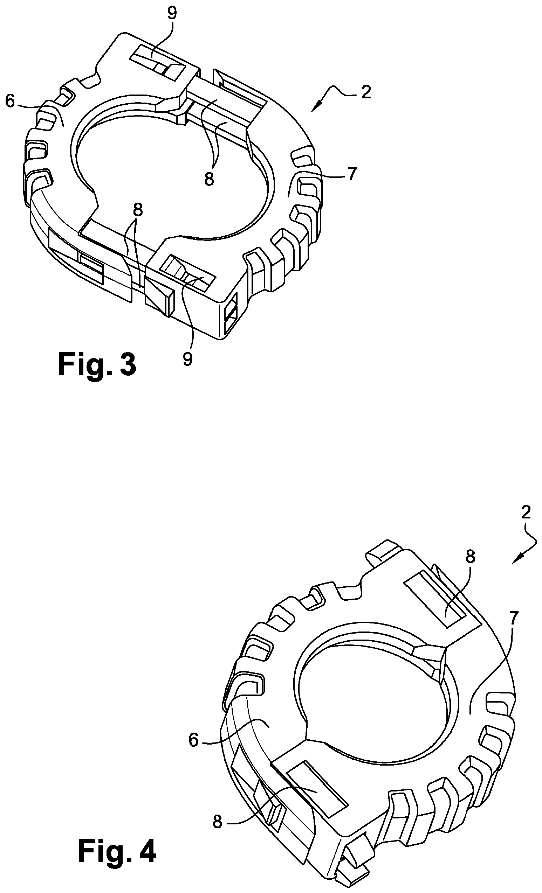

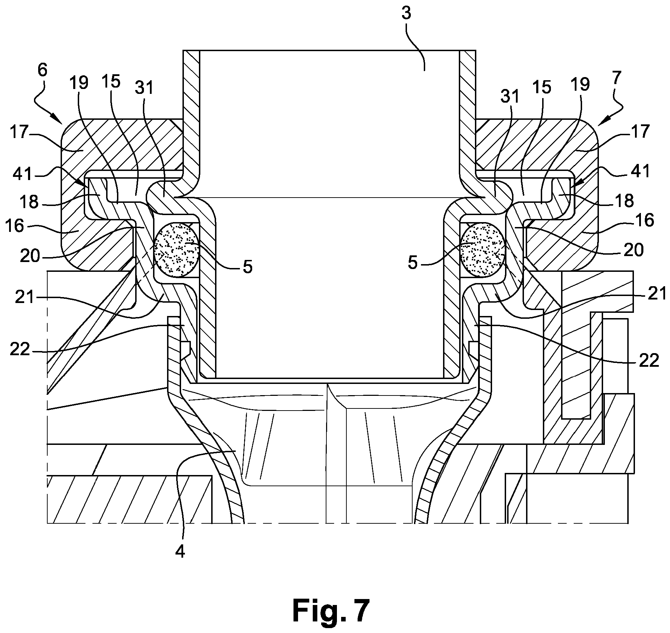

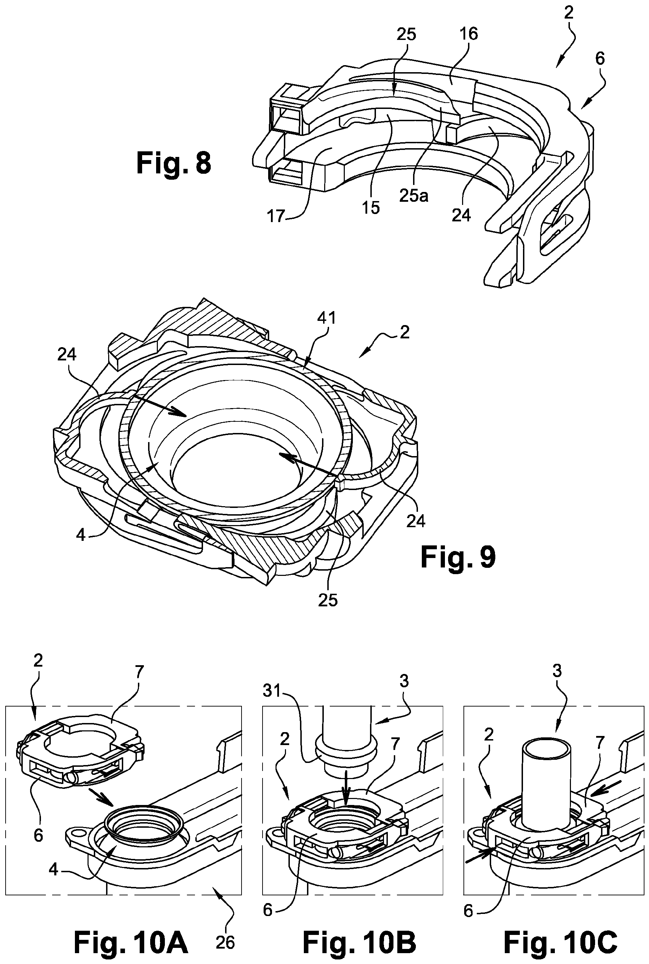

Tel qu'illustrée sur les figures 3 et 4, sans ses éléments de rappel, une pièce de raccordement 2 selon l'invention comprend deux demi-parties de raccordement 6, 7 qui s'emboîtent par translation de chaque partie 6, 7 l'une dans l'autre. Les deux parties 6, 7 peuvent être identiques. Chaque partie 6, 7 peut se présenter sous la forme d'un demi-anneau et comprendre une zone de réception 15 (figures 7 et 8) d'au moins un élément de raccordement des deux tubulures. La zone de réception 15 est destinée à maintenir ensemble l'élément de raccordement de la première tubulure et l'élément de raccordement de la deuxième tubulure, à la manière d'une pince, par exemple en sollicitant axialement l'un vers l'autre l'élément de raccordement de la première tubulure et l'élément de raccordement de la deuxième tubulure, de manière à assurer le raccordement des deux tubulures.

Chaque partie 6, 7 comprend également un élément mâle 8 apte à s'insérer dans un élément femelle 9 de l'autre partie 7, 6 et un élément femelle 9 apte à recevoir l'élément mâle 8 de l'autre partie 7, 6. L'élément mâle 8 est avantageusement disposé à une extrémité du demi-anneau 6, 7 tandis que l'élément femelle 9 est disposé à l'autre extrémité.

La zone de réception 15 est typiquement une rainure formée dans chaque demi-anneau 6, 7 et dans laquelle peut s'insérer le ou les éléments de raccordement des tubulures, qui sont des éléments de préhension. Les éléments de raccordement des tubulures 3, 4 sont maintenus dans la zone de réception 15. L'élément de raccordement est typiquement une collerette 41 d'une des deux tubulures 4 et/ou un bourrelet 31 de l'autre tubulure 3 (figure 7).

Dans chaque partie 6, 7, l'élément mâle 8 peut comprendre au moins un bras, apte à coulisser dans l'élément femelle 9 de l'autre partie 7, 6, ledit élément femelle 9 pouvant être une rainure ou un rail de guidage. A titre d'exemple, et tel qu'illustré sur les figures 3 et 4, chaque partie 6, 7 peut comprendre deux bras coulissant dans deux rails de l'autre partie 7, 6. Grâce au coulissement relatif des deux demi-anneaux 6, 7, la pièce de raccordement 2 est mobile entre une position ouverte dans laquelle la pièce 2 peut être pré-positionnée sur les deux tubulures 3, 4, et illustrée à la figure 2, et une position fermée dans laquelle la pièce 2 assure le raccordement des deux tubulures 3, 4, et illustrée à la figure 4.

La position fermée est avantageusement assurée à l'aide de clips, par exemple à l'aide de clips radiaux (figures 3 à 5). Chaque élément mâle 8 peut ainsi être muni à son extrémité d'un élément en saillie 10 sous la forme d'une protubérance, à la manière d'un clip, par exemple de section triangulaire en coupe longitudinale, qui vient se clipper par une force de rappel à la sortie de l'élément femelle 9 dans lequel coulisse l'élément mâle 8. De manière similaire, chaque partie de raccordement 6, 7 peut comprendre en outre un élément 11 en saillie du pourtour de la partie 6, 7, ledit élément en saillie 11 pouvant être par exemple de section triangulaire en coupe radiale, et qui vient se clipper par une force de rappel dans une ouverture de l'autre partie 7, 6. Les deux parties de raccordement 6, 7 peuvent être munies d'échancrures, ce qui procure un gain de matière.

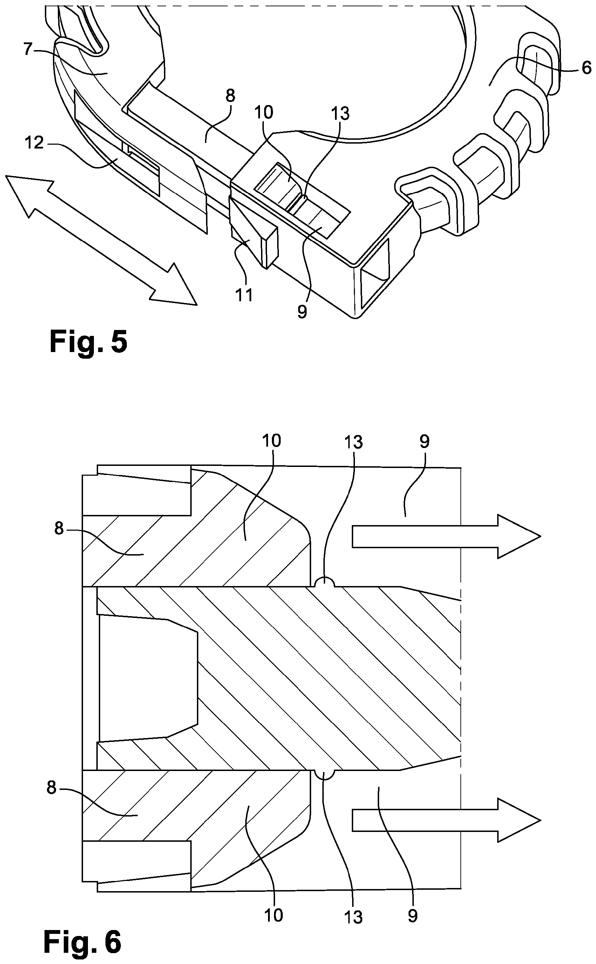

Dans le mode de réalisation illustré aux figures 5 et 6, un bossage ou une nervure 13 est disposée dans chaque rail de guidage, de manière à créer un obstacle dans l'élément femelle 9, ce qui bloque l'élément mâle 8 et force la pièce de raccordement 2 à être en position ouverte et favorise ainsi le pré-positionnement de la pièce de raccordement 2 autour des tubulures 3, 4. La nervure 13 permet de bloquer le clip en position ouverte, mais l'utilisateur peut appliquer une force pour que l'élément mâle 8 enjambe la nervure 13 et se fixe dans l'ouverture 10 par la force de rappel du clip. Sur la figure 5, les flèches illustrent le sens de verrouillage et de déverrouillage de la pièce 2. Sur la figure 6, les flèches illustrent les trajectoires des clips.

La figure 7 illustre en coupe longitudinale la zone de raccordement entre les deux tubulures 3,4. La zone de réception 15 de la pièce de raccordement 2 accueille le bourrelet 31 de la première tubulure 3 et la collerette 41 de la deuxième tubulure 4. La zone de réception 15 de la pièce de raccordement 2 est délimitée par une bordure inférieure 16 et une bordure supérieure 17, parallèles entre elles et reliées par une bordure latérale qui leur est orthogonale. La collerette 41 de la deuxième tubulure 4 peut présenter une section en forme de L, dont une partie cylindrique 18 et une partie annulaire 19, et s'appuyer via sa partie annulaire 19 sur la bordure inférieure 16 de la pièce de raccordement 2. Le bourrelet 31 de la première tubulure peut être quant à lui en appui sur la bordure supérieure 17 de la pièce de raccordement, à l'intérieur de la collerette 41. La bordure supérieure 17 de la pièce de raccordement 2 est avantageusement plus large que la bordure inférieure 16, de manière à ce que la bordure supérieure 17 prenne appui sur le bourrelet 31 tandis qu'un joint 5 peut être disposé sous le bourrelet 31 au niveau de la bordure inférieure 16 de la pièce de raccordement 2.

La collerette 41 de la deuxième tubulure 4 peut se prolonger par une ou plusieurs parties cylindriques 18, 20, 22 concentriques et de rayons décroissants, séparées par des parties annulaires 19, 21, le profil de l'extrémité de la deuxième tubulure 4 présentant ainsi une forme en escalier. De haut en bas, la bordure supérieure 17 de la pièce de raccordement 2 s'appuie ainsi sur le bourrelet 31 de la première tubulure 3, le bourrelet 31 s'appuyant sur le joint 5, qui s'appuie lui-même sur la partie annulaire inférieure 21 de la deuxième tubulure 2. La partie annulaire supérieure 19 de la tubulure 2, qui fait partie de la collerette 41, s'appuie quant à elle sur la bordure inférieure 16 de la pièce de raccordement 2.

Les figures 8 et 9 illustrent les éléments de rappel de la pièce de raccordement 2. La pièce de raccordement 2 comprend ainsi au moins un premier élément de rappel 24, ainsi qu'au moins un deuxième élément de rappel 25. Pour plus de clarté, la figure 8 illustre une seule partie 6 de la pièce de raccordement 2, l'autre partie 7 étant identique à la partie 6 illustrée.

Le premier élément de rappel 24 est configuré pour appuyer radialement sur une surface de plus grand diamètre de la deuxième tubulure 4 en position serrée des deux parties de raccordement 6, 7. La surface de plus grand diamètre de la deuxième tubulure 4 peut être la partie cylindrique 18 de la collerette 41 (figure 7). C'est ainsi le premier élément de rappel 24 qui maintient la pièce de raccordement 2 sur la deuxième tubulure 4.

Le premier élément de rappel 24 est avantageusement une languette de forme en portion d'anneau (ou de cercle), et il peut être issu de la bordure de la zone de réception 15. La bordure 1 de la zone de réception 15 présente un plus grand diamètre que la bordure 16 radialement distale du centre de la pièce 2. Ainsi, le premier élément de rappel 24 est plus éloigné du centre de la deuxième tubulure 4 que ne l'est le deuxième élément de rappel 25, ce qui est justifié par le fait que le premier élément de rappel 24 appuie sur la surface 18, 20 de plus grand diamètre.

Le deuxième élément de rappel 25 est configuré pour guider le premier élément de rappel 24 sur la collerette 41, en position écartée des deux parties 6,7 de la pièce de raccordement. Il est également configuré pour appuyer radialement sur une surface de plus petit diamètre de la deuxième tubulure 4 en position serrée des deux parties 6, 7 de la pièce de raccordement. La surface de plus petit diamètre peut être la partie cylindrique 20 de la deuxième tubulure 4 (figure 7).

Le deuxième élément de rappel 25 est avantageusement une languette en forme de portion d'anneau (ou de cercle), et il peut être issu de la bordure 16 radialement distale du centre de la pièce 2 (figures 7 et 8) et il épouse ainsi le contour de la bordure 16 en position serrée des deux parties 6, 7. Le deuxième élément de rappel 25 présente avantageusement une extrémité biseautée 25a, de manière à permettre le passage de la pièce au-delà de la collerette 41. Le biseau 25a peut présenter une surface inclinée dirigée vers le centre de la deuxième tubulure 4 pour faciliter le passage du deuxième élément de rappel 25 sur la collerette 41.

Le premier élément de rappel 24 et le deuxième élément de rappel 25 sont ainsi avantageusement situés à deux niveaux longitudinaux différents (l'axe longitudinal étant l'axe des tubulures 3, 4 en configuration opérationnelle de la pièce de raccordement 2), ce qui permet un moulage plus facile de la pièce de raccordement 2. Le positionnement à deux niveaux différents permet également un chevauchement du premier élément de rappel 24 et du deuxième élément de rappel 25. On peut toutefois également envisager que le premier élément de rappel 24 et le deuxième élément de rappel 25 soient longitudinalement au même niveau.

Tel qu'illustré à la figure 9, la pièce de raccordement 2 comprend avantageusement deux premiers éléments de rappel 24 qui sont disposés symétriquement par rapport au centre de la pièce 2 dans le plan passant par les deux premiers éléments de rappel 24. Ainsi, les deux premiers éléments de rappel 24 exercent des forces opposées (représentées par des flèches) sur la deuxième tubulure 4 (figure 9). De la même façon, les deux deuxièmes éléments de rappel 25 peuvent être disposés symétriquement par rapport au centre de la pièce 2 dans le plan passant par les deux deuxièmes éléments de rappel 25.

Les figures 10A à 10C illustrent les différentes étapes d'un raccordement coaxial de deux tubulures utilisant la pièce de raccordement 2.

Dans une première étape (figure 10A), on vient monter la pièce de raccordement 2, dans sa configuration ouverte, sur la deuxième tubulure 4, qui est typiquement une tubulure d'entrée ou de sortie d'un radiateur de refroidissement d'un moteur de véhicule automobile ou encore un radiateur de chauffage de l'habitacle d'un tel véhicule. La pièce de raccordement 2 est montée sur la collerette 41 de la deuxième tubulure 4, à l'aide des premiers éléments de rappel 24 et des deuxièmes éléments de rappel 25, comme expliqué ci-dessus. La pièce 2 est déplacée en translation verticale vers le bas, en direction de la deuxième tubulure 4. Dans un premier temps, les deuxièmes éléments de rappel 25 viennent en contact avec la collerette 41, ce qui permet de guider la pièce 2 et de la pré-positionner précisément autour de la deuxième tubulure 4. Lors de la descente de la pièce, les extrémités biseautés 25a des deuxièmes éléments de rappel 25 permettent un franchissement aisé de la collerette 41. Dans un deuxième temps, les premiers éléments de rappel 24 viennent en appui radial sur la collerette 41, tel qu'illustré à la figure 9, les deuxièmes éléments de rappel 25 étant situés vis-à-vis de la partie cylindrique 20 de la deuxième tubulure 4 (figure 7). Les deux parties de raccordement 6, 7 sont ainsi maintenues en position pré-ouverte et ne se referment pas avant l'insertion de la première tubulure 3. Cette position pré-ouverte permet en outre de vérifier aisément que la pièce de raccordement 2 n'est pas verrouillée. Enfin, le pré-assemblage réalisé permet d'insérer facilement la première tubulure 3 dans la deuxième tubulure 4 et ainsi de simplifier et de sécuriser la procédure de raccordement.

Dans une deuxième étape, une fois que la pièce de raccordement 2 est pré-assemblée sur la deuxième tubulure 4, on vient insérer la première tubulure 3 dans la deuxième tubulure 4 (Figure 10B). On rapproche ensuite les deux parties 6, 7 de la pièce de raccordement 2 par translation des deux parties 6, 7 dans les directions indiquées par les flèches (figure 10C). Le procédé s'achève lorsque les deux parties 6, 7 de la pièce de raccordement 2 sont clippées l'une dans l'autre, cette étape étant réalisée par application d'une force par l'utilisateur pour tout fermer. Ainsi, les deux parties 6, 7 de la pièce de raccordement 2 encerclent et maintiennent le bourrelet 31 de la première tubulure 3 et la collerette 41 de la deuxième tubulure 4, ce qui assure le raccordement. En position serrée des deux parties, les premiers éléments de rappel 24 sont en contact avec la partie cylindrique 18 de la collerette 41, tandis que les deuxièmes éléments de rappel 25 sont en contact avec la partie cylindrique 20 de la deuxième tubulure 4.

## Revendications

1. Pièce (2) pour le raccordement coaxial de deux tubulures (3,4) de forme allongée, ladite pièce comprenant deux parties de raccordement (6, 7) munies chacune d'une zone de réception (15) d'un élément de raccordement (31, 41) de chaque tubulure (3, 4), dont un élément de raccordement radialement externe (41) et un élément de raccordement radialement interne (31), les deux parties de raccordement (6, 7) étant aptes à coulisser l'une dans l'autre, entre une position écartée des deux parties (6, 7) et une position resserrée des deux parties (6, 7) dans laquelle les deux zones de réception (15) sont aptes à maintenir les éléments de raccordement (31, 41) ensemble et à former un contour fermé, au moins une partie de raccordement (6, 7) comprenant:
- au moins un premier élément de rappel (24) configuré pour permettre un pré-assemblage de la pièce de raccordement (2) sur l'élément de raccordement externe (41) dans une position écartée des deux parties (6, 7), en appuyant radialement sur une surface de plus grand diamètre de la tubulure (4) munie de l'élément de raccordement externe (41), **caractérisé en ce que** ladite au moins une partie de raccordement (6, 7) comprend de plus:
- au moins un deuxième élément de rappel (25) configuré pour appuyer radialement sur une surface de plus petit diamètre de la tubulure (4) munie de l'élément de raccordement externe (41).

2. Pièce (2) selon la revendication 1, **caractérisée en ce que** chaque partie de raccordement (6, 7) comprend un premier élément de rappel (24) et un deuxième élément de rappel (25).

3. Pièce (2) selon la revendication 2, **caractérisée en ce que**, dans chaque partie de raccordement, le premier élément de rappel (24) et le deuxième élément de rappel (25) sont disposés à deux niveaux longitudinaux différents.

4. Pièce (2) selon l'une des revendications 1 à 3, **caractérisée en ce que** les zones de réception (15) des deux parties de raccordement (6, 7) forment une rainure annulaire disposée dans un plan radial de la pièce (2).

5. Pièce (2) selon la revendication 4, **caractérisée en ce que** la rainure (15) est délimitée par deux bordures extérieures (16, 17) de largeurs radiales différentes, dont une bordure extérieure (17) radialement proximale du centre de la pièce (2) et une bordure extérieure (16) radialement distale du centre de la pièce (2).

6. Pièce (2) selon la revendication 5, **caractérisé en ce que** chaque premier élément de rappel (24) est issu d'une bordure de la zone de réception (15) et **en ce que** chaque deuxième élément de rappel (25) est issu de la bordure extérieure (16) radialement distale.

7. Pièce (2) selon l'une des revendications 1 à 6, **caractérisée en ce que** chaque partie de raccordement (6) comprend une zone mâle (8) coulissant dans une zone femelle associée (9) de l'autre partie (7, 6), et une zone femelle (9) dans laquelle coulisse la zone mâle de l'autre partie de raccordement (7, 6).

8. Pièce (2) selon la revendication 7, **caractérisée en ce que** la zone mâle (8) de chaque partie de raccordement (6, 7) comprend au moins un bras coulissant dans au moins rail de la zone femelle (9) de l'autre partie de raccordement (7, 6).

9. Pièce (2) selon la revendication 8, **caractérisée en ce qu'**un bossage (13) est disposé dans chaque rail, ledit bossage (13) étant apte à maintenir les deux parties de raccordement (6, 7) dans une position écartée.

10. Pièce (2) selon une des revendications 1 à 9, **caractérisée en ce que** chaque partie de raccordement (6, 7) est munie d'au moins un clip, de manière à ce que la position resserrée des deux parties de raccordement (6, 7) soit obtenue par clippage.

11. Pièce (2) selon la revendication 10, **caractérisée en ce que** chaque partie de raccordement (6, 7) comprend en outre un élément (11) en saillie du pourtour de la partie (6, 7) et qui vient se clipper dans une ouverture (12) de l'autre partie de raccordement (6, 7).

12. Dispositif (1) pour le raccordement coaxial de deux tubulures (3, 4), par coopération d'une région d'extrémité d'une première tubulure (3) avec une région d'extrémité d'une deuxième tubulure (4), **caractérisé en ce qu'**il comprend une pièce de raccordement (2) selon l'une des revendications 1 à 11 qui est disposée autour d'éléments de raccordement (31, 41) des tubulures (3, 4).

## Patentansprüche

1. Stück (2) für die koaxiale Kopplung von zwei Stutzen (3, 4) mit länglicher Form, wobei das Stück zwei Kopplungsteile (6, 7) umfasst, die jeweils mit einer Zone (15) zur Aufnahme eines Kopplungselements (31, 41) jedes Stutzens (3, 4), und zwar eines radial äußeren Kopplungselements (41) und eines radial inneren Kopplungselements (31), versehen sind, wobei die beiden Kopplungsteile (6, 7) in der Lage sind, in einander zwischen einer beabstandeten Position der beiden Teile (6, 7) und einer zusammengezogenen Position der beiden Teile (6, 7) zu gleiten, in der die beiden Aufnahmezonen (15) in der Lage sind, die Kopplungselemente (31, 41) zusammenzuhalten und eine geschlossene Kontur zu bilden, wobei mindestens ein Kopplungsteil (6, 7) Folgendes umfasst:
- mindestens ein erstes Rückholelement (24), das dazu ausgestaltet ist, eine Vormontage des Kopplungsstücks (2) an dem äußeren Kopplungselement (41) in einer beabstandeten Position der beiden Teile (6, 7) zu gestatten, indem es radial auf eine Fläche mit größerem Durchmesser des Stutzens (4) drückt, der mit dem äußeren Kopplungselement (41) versehen ist, **dadurch gekennzeichnet, dass** der mindestens eine Kopplungsteil (6, 7) ferner Folgendes umfasst:
- mindestens ein zweites Rückholelement (25), das zum radialen Drücken auf eine Fläche mit kleinerem Durchmesser des Stutzens (4), der mit dem äußeren Kopplungselement (41) versehen ist, ausgestaltet ist.

2. Stück (2) nach Anspruch 1, **dadurch gekennzeichnet, dass** jeder Kopplungsteil (6, 7) ein erstes Rückholelement (24) und ein zweites Rückholelement (25) umfasst.

3. Stück (2) nach Anspruch 2, **dadurch gekennzeichnet, dass** das erste Rückholelement (24) und das zweite Rückholelement (25) in jedem Kopplungsteil auf zwei verschiedenen Längshöhen angeordnet sind.

4. Stück (2) nach einem der Ansprüche 1 bis 3, **dadurch gekennzeichnet, dass** die Zonen (15) zur Aufnahme der beiden Kopplungsteile (6, 7) eine ringförmige Nut bilden, die in einer radialen Ebene des Stücks (2) angeordnet ist.

5. Stück (2) nach Anspruch 4, **dadurch gekennzeichnet, dass** die Nut (15) durch zwei äußere Umrandungen (16, 17) mit unterschiedlichen radialen Breiten begrenzt ist, wovon eine äußere Umrandung (17) radial proximal zu der Mitte des Stücks (2) liegt und eine äußere Umrandung (16) radial distal zu der Mitte des Stücks (2) liegt.

6. Stück (2) nach Anspruch 5, **dadurch gekennzeichnet, dass** jedes erste Rückholelement (24) aus einer Umrandung der Aufnahmezone (15) ausgeht und dass jedes zweite Rückholelement (25) aus der radial distalen äußeren Umrandung (16) ausgeht.

7. Stück (2) nach einem der Ansprüche 1 bis 6, **dadurch gekennzeichnet, dass** jeder Kopplungsteil (6) eine männliche Zone (8), die in einer zugeordneten weiblichen Zone (9) des anderen Teils (7, 6) gleitet, und eine weibliche Zone (9) umfasst, in der die männliche Zone des anderen Kopplungsteils (7, 6) gleitet.

8. Stück (2) nach Anspruch 7, **dadurch gekennzeichnet, dass** die männliche Zone (8) jedes Kopplungsteils (6, 7) mindestens einen Arm umfasst, der in mindestens Schiene der weiblichen Zone (9) des anderen Kopplungsteils (7, 6) gleitet.

9. Stück (2) nach Anspruch 8, **dadurch gekennzeichnet, dass** ein Buckel (13) in jeder Schiene angeordnet ist, wobei der Buckel (13) in der Lage ist, die beiden Kopplungsteile (6, 7) in einer beabstandeten Position zu halten.

10. Stück (2) nach einem der Ansprüche 1 bis 9, **dadurch gekennzeichnet, dass** jeder Kopplungsteil (6, 7) mit mindestens einem Klip versehen ist, so dass die zusammengezogene Position der beiden Kopplungsteile (6, 7) durch eine Klipverbindung erhalten wird.

11. Stück (2) nach Anspruch 10, **dadurch gekennzeichnet, dass** jeder Kopplungsteil (6, 7) ferner ein Element (11) umfasst, das von dem äußeren Umfang des Teils (6, 7) vorragt und in einer Öffnung (12) des anderen Kopplungsteils (6, 7) einrastet.

12. Vorrichtung (1) für die koaxiale Koppelung von zwei Stutzen (3, 4) durch Zusammenwirken eines Endbereichs eines ersten Stutzens (3) mit einem Endbereich eines zweiten Stutzens (4), **dadurch gekennzeichnet, dass** sie ein Kopplungsstück (2) nach einem der Ansprüche 1 bis 11 umfasst, das um Kopplungselemente (31, 41) der Stutzen (3, 4) herum angeordnet ist.

## Claims

1. Part (2) for coaxially coupling two pipes (3, 4) of elongated shape, said part comprising two coupling portions (6, 7) each provided with a zone (15) for receiving a coupling element (31, 41) of each pipe (3, 4), these being a radially external coupling element (41) and a radially internal coupling element (31), the two coupling portions (6, 7) being capable of sliding inside each other, between a separated position of the two portions (6, 7) and a tightened position of the two portions (6, 7) in which the two receiving zones (15) are capable of holding the coupling elements (31, 41) together and forming a closed contour, at least one coupling portion (6, 7) comprising:
- at least one first return element (24) configured to enable the pre-assembly of the coupling part (2) on the external coupling element (41) in a separated position of the two portions (6, 7), by pressing radially on a larger-diameter surface of the pipe (4) provided with the external coupling element (41),
**characterized in that** said at least one coupling portion (6, 7) also comprises:
- at least one second return element (25) configured to press radially on a smaller-diameter surface of the pipe (4) provided with the external coupling element (41).

2. Part (2) according to Claim 1, **characterized in that** each coupling portion (6, 7) comprises a first return element (24) and a second return element (25).

3. Part (2) according to Claim 2, **characterized in that**, in each coupling portion, the first return element (24) and the second return element (25) are arranged on two different longitudinal levels.

4. Part (2) according to one of Claims 1 to 3, **characterized in that** the receiving zones (15) of the two coupling portions (6, 7) form an annular groove arranged in a radial plane of the part (2).

5. Part (2) according to Claim 4, **characterized in that** the groove (15) is defined by two external edges (16, 17) with different radial widths, these being an external edge (17) radially proximal to the centre of the part (2) and an external edge (16) radially distal from the centre of the part (2).

6. Part (2) according to Claim 5, **characterized in that** each first return element (24) originates from an edge of the receiving zone (15) and **in that** each second return element (25) originates from the radially distal external edge (16).

7. Part (2) according to one of Claims 1 to 6, **characterized in that** each coupling portion (6) comprises a male zone (8) sliding in an associated female zone (9) of the other portion (7, 6), and a female zone (9) in which the male zone of the other coupling portion (7, 6) slides.

8. Part (2) according to Claim 7, **characterized in that** the male zone (8) of each coupling portion (6, 7) comprises at least one arm sliding in at least one rail of the female zone (9) of the other coupling portion (7, 6) .

9. Part (2) according to Claim 8, **characterized in that** a boss (13) is arranged in each rail, said boss (13) being capable of holding the two coupling portions (6, 7) in a separated position.

10. Part (2) according to one of Claims 1 to 9, **characterized in that** each coupling portion (6, 7) is provided with at least one clip, so that the tightened position of the two coupling portions (6, 7) is obtained by clipping.

11. Part (2) according to Claim 10, **characterized in that** each coupling portion (6, 7) additionally comprises an element (11) that projects from the perimeter of the portion (6, 7) and that clips into an opening (12) of the other coupling portion (6, 7).

12. Device (1) for coaxially coupling two pipes (3, 4), by engagement of an end region of a first pipe (3) with an end region of a second pipe (4), **characterized in that** it comprises a coupling part (2) according to one of Claims 1 to 11 that is arranged around coupling elements (31, 41) of the pipes (3, 4).
